# EUROPÄISCHE PATENTSCHRIFT

(11) **EP 3 804 588 B1**
(45) Veröffentlichungstag und Bekanntmachung des Hinweises auf die Patenterteilung: **07.02.2024**
(21) Anmeldenummer: 20199643.6
(22) Anmeldetag: 01.10.2020
(51) Int. Cl.: A47J 43/044, A47J 36/32, A47J 27/00

(54) **KOCHPROZESSOR**
COOKING PROCESSOR
PROCESSEUR DE CUISSON

(30) Priorität: 09.10.2019 DE 102019215464
(43) Veröffentlichungstag der Anmeldung: 14.04.2021
(73) Patentinhaber: BSH Hausgeräte GmbH, 81739 München (DE)
(72) Erfinder: Grimminger, Jochen, 89407 Dillingen (DE); Kolbe, Andreas, 12683 Berlin (DE); Krautenbacher, Otto, 83349 Palling (DE); Söllner, Christoph, 81475 München (DE); Sieveke, Kai, 97070 Würzburg (DE); Brunner, Andreas, 83301 Traunreut (DE)

(56) Entgegenhaltungen:
- EP-A1- 3 430 914
- WO-A1-87/01021
- DE-A1-102016 110 710

## Beschreibung

Die Erfindung betrifft einen Kochprozessor, der dazu eingerichtet ist, Lebensmittel zu erwärmen und/oder mechanisch zu bearbeiten. Insbesondere betrifft die Erfindung die Steuerung eines Kochprozessors.

Ein Kochprozessor ist dazu eingerichtet, Lebensmittel zu verarbeiten, um insbesondere eine Speise zuzubereiten. Üblicherweise umfasst ein Kochprozessor eine mechanische Bearbeitungseinrichtung und eine Heizeinrichtung, die mittels einer Verarbeitungseinrichtung gesteuert werden können.

Zur manuellen Bedienung eines solchen Kochprozessors müssen üblicherweise die Stärke der Bearbeitung, die Stärke der Erwärmung und eine Behandlungszeit manuell eingegeben werden. Ein Risiko der Fehleingabe oder Bildung einer Kombination schlecht miteinander harmonierender Parameter ist dabei hoch.

Es wurde vorgeschlagen, zur automatischen Bedienung des Kochprozessors die Parameter in Abhängigkeit einer vorbestimmten Speise auszuwählen. Beispielsweise können zur Zubereitung von Kartoffelbrei eine vorbestimmte Bearbeitungsstärke und eine vorbestimmte Erwärmung gesteuert werden. Optional kann auch eine Behandlungsdauer in Abhängigkeit der Speise ausgewählt werden. Dabei ist die Verwendung des Kochprozessors auf vorbestimmte Speisen beschränkt und eine benutzergesteuerte Abwandlung kann nicht vorgesehen sein.

DE 10 2011 052 405 A1 schlägt vor, einen Kochprozessor mit einem Touchscreen und mechanischen Bedienelementen auszustatten, und eine Rühreinrichtung und eine Heizeinrichtung nur auf der Basis einer Eingabe mittels dem mechanischen Bedienelement zu steuern. WO 87/01021 A1 offenbart einen Kochprozessor zur Behandlung von Lebensmitteln, wobei der Kochprozessor folgendes umfasst: eine Heizeinrichtung; eine mechanische Bearbeitungsvorrichtung; eine Speichervorrichtung zur Aufnahme von vorbestimmten Ablaufblöcken; und eine Verarbeitungseinrichtung, die dazu eingerichtet ist einen der Ablaufblöcke zu bestimmen und die Heizeinrichtung und/oder die Bearbeitungsvorrichtung jeweils in Abhängigkeit eines vom bestimmten Ablaufblock umfassten vorbestimmten Verlaufs zu aktivieren. DE 102016110710 A1 offenbart ein Verfahren zum Betreiben einer Küchenmaschine, bei dem in einem Zubereitungsmodus mindestens ein Arbeitsgerät der Küchenmaschine angesteuert wird, um Lebensmittel zumindest teilweise automatisch zuzubereiten, wobei eine Überwachungseinrichtung Erkennungswerte ermittelt, durch Erfassen von mindestens zwei Erkennungsvariablen, die für einen Vorbereitungszustand spezifisch sind.

Eine der vorliegenden Erfindung zu Grunde liegende Aufgabe besteht in der Angabe einer Technik, um einen Kochprozessor verbessert zu steuern. Die Erfindung löst diese Aufgabe mittels der Gegenstände der unabhängigen Ansprüche. Unteransprüche geben bevorzugte Ausführungsformen wieder.

Ein Kochprozessor zur Behandlung von Lebensmitteln umfasst eine Heizeinrichtung; eine mechanische Bearbeitungsvorrichtung; eine Speichervorrichtung zur Aufnahme von vorbestimmten Ablaufblöcken; und eine Verarbeitungseinrichtung. Nach einem ersten Aspekt der Erfindung ist die Verarbeitungseinrichtung dazu eingerichtet, einen der Ablaufblöcke zu bestimmen; und die Heizeinrichtung und/oder die Bearbeitungsvorrichtung jeweils in Abhängigkeit eines vom bestimmten Ablaufblock umfassten vorbestimmten Verlaufs zu aktivieren.

Die Erfindung ermöglicht die Verwendung von Ablaufblöcken, die flexibel für verschiedene Speisen oder Schritte eines Rezepts eingesetzt werden können. Dabei kann ein Risiko, nicht miteinander harmonierende Kombinationen von Aktivierungen der Heizeinrichtung und der Bearbeitungsvorrichtung zu verwenden, minimiert werden. Durch die Verwendung von Verläufen können die Erwärmung und die Bearbeitung verbessert aufeinander abgestimmt werden. Die Verläufe können einen programmgesteuerten Ablauf repräsentieren. Ein Resultat eines Verarbeitungsschritts, der mittels des Kochprozessors durchgeführt wird, kann verbessert sein. Ein Benutzer des Kochprozessors kann ein gewünschtes Resultat leichter oder sicherer erreichen. Dabei kann eine Flexibilität des Kochprozessors nur in geringem Umfang eingeschränkt sein.

In einer ersten Variante ist die Verarbeitungseinrichtung dazu eingerichtet, den Ablaufblock in Abhängigkeit von benutzergesteuerten Eingaben für eine Erwärmungsintensität, eine Bearbeitungsintensität und/oder eine Behandlungszeit zu bestimmen. Die Verarbeitungseinrichtung kann den Auswahlprozess unterstützen, beispielsweise indem für einen eingegebenen Parameter Kombinationen weiterer Parameter angegeben werden, die von einem der vorbestimmten Ablaufblöcke umfasst sind. Bezüglich einer Kombination von Erwärmungsintensität, Bearbeitungsintensität und Behandlungszeit, die nicht von einem vorbestimmten Ablaufblock umfasst ist, kann ein Hinweis auf einen Ablaufblock ausgegeben werden, der sich möglichst wenig von der gegebenen Kombination unterscheidet.

In einer zweiten Variante ist die Verarbeitungseinrichtung dazu eingerichtet, den Ablaufblock in Abhängigkeit eines mit der Bearbeitungsvorrichtung verbundenen Werkzeugs zu bestimmen. So können beispielsweise Ablaufblöcke für vorbestimmte, grundlegende Verarbeitungsschritte angegeben sein, die mittels des Kochprozessors durchgeführt werden können. Ein solcher Verarbeitungsschritt kann etwa das Kneten von Teig, ein Raspeln oder Reiben von Gemüse, ein Mixen, Mahlen oder Aufschäumen, ein Anschwitzen, Simmern, Köcheln oder Kochen umfassen. Ein Ablaufblock kann anhand eines verwendeten Werkzeugs leicht ausgewählt werden. Eine Anzahl von Ablaufblöcken, die einem Werkzeug zugeordnet sind, kann klein sein, sodass nach der Bestimmung des Werkzeugs viele oder alle Ablaufblöcke einem Benutzer zur Auswahl angeboten werden können. Der Benutzer kann bei einer schnellen und sicheren Auswahl eines zu einer Speise oder einem Verarbeitungsschritt passenden Ablaufblocks unterstützt werden.

Das Werkzeug kann auf der Basis einer benutzergesteuerten Eingabe bestimmt werden. Dazu kann ein Benutzer beispielsweise aus einer textuellen oder bildlichen Liste ein eingesetztes Werkzeug auswählen. Der Benutzer kann das Werkzeug auch beispielsweise mittels einer Bezeichnung angeben. Die Bezeichnung kann natürlichsprachlich sein, ein Kunstwort oder eine Markenbezeichnung umfassen, oder als Code angegeben sein, beispielsweise numerisch oder alphanumerisch.

In einer weiteren Ausführungsform ist eine Abtasteinrichtung zur Bestimmung eines mit der Bearbeitungsvorrichtung verbundenen Werkzeugs vorgesehen. Die Abtasteinrichtung kann mit dem Kochprozessor verbunden und zur Abtastung an das Werkzeug geführt werden. Alternativ dazu kann die Abtasteinrichtung am Kochprozessor angebracht sein, wobei das Werkzeug zur Abtastung in einen Abtastbereich der Abtasteinrichtung gebracht werden kann. Die Abtasteinrichtung kann derart im Bereich der Bearbeitungsvorrichtung angebracht sein, dass sie ein Werkzeug abtasten kann, welches mit der Bearbeitungsvorrichtung verbunden ist. Die Abtastung erfolgt bevorzugt berührungslos.

Das Werkzeug kann beispielsweise mittels einer Kamera aufgrund seines Aussehens bestimmt werden. Das Werkzeug kann auch einen Identifikator tragen, der durch die Abtasteinrichtung abgetastet werden kann. Der Identifikator kann beispielsweise als binärer optischer Code angegeben sein, beispielsweise eindimensional als Strichcode oder zweidimensional als QR-Code. In einer weiteren Ausführungsform kann das Werkzeug einen Transponder umfassen, welcher mittels elektromagnetischer Wellen durch die Abtasteinrichtung angeregt werden und ihr auf gleichem Weg eine Identifikation bereitstellen kann. Ein solcher Transponder kann als RFID- oder NFC-Tag ausgebildet sein.

Der Kochprozessor kann ferner eine Interaktionseinrichtung zur Bereitstellung eines Parameters für eine Aktivierung der Bearbeitungsvorrichtung oder der Heizeinrichtung in Abhängigkeit des Ablaufblocks, sowie zur Abtastung einer benutzergesteuerten Änderung des Parameters umfassen. Anders ausgedrückt kann eine Änderung eines vorbestimmten Aktivierungsverlaufs der Heizeinrichtung und/oder der Bearbeitungsvorrichtung durch einen Benutzer mittels einer Interaktionseinrichtung möglich sein. Die Interaktionseinrichtung kann eine Eingabevorrichtung und/oder eine Ausgabevorrichtung umfassen, die einzeln oder in Kombination miteinander vorgesehen sein können. In einer Ausführungsform umfasst die Interaktionseinrichtung einen Touchscreen.

Die Änderung kann nur innerhalb eines vorbestimmten Bereichs zugelassen werden. Beispielsweise kann eine Bearbeitungsstärke in einem Ablaufblock für das Kneten von Teig nicht über einen vorbestimmten Wert gesteigert werden. Sollte ein Benutzer einen Parameter eines Ablaufblocks weiter zu verändern wünschen als vorbestimmt, so kann die Auswahl eines alternativen Ablaufblocks angeboten werden, der den Parameter im gewünschten Bereich unterstützt. Im oben gegebenen Beispiel kann etwa vom Ablaufblock zum Kneten von Teig in einen Ablaufblock zum Schlagen von Sahne gewechselt werden. Beim Wechsel des Ablaufblocks kann ein Wechsel eines verwendeten Werkzeugs vorgeschlagen werden, hier beispielsweise ein Wechsel von einem Knethaken zu einem Schneebesen.

Nach einem zweiten Aspekt der Erfindung umfasst ein Verfahren zum Steuern eines Kochprozessors, der zur Behandlung von Lebensmitteln eingerichtet ist und eine Heizeinrichtung und eine mechanische Bearbeitungsvorrichtung umfasst, Schritte des Bestimmens eines von mehreren vorbestimmten Ablaufblöcken; und des Aktivierens der Heizeinrichtung und/oder der Bearbeitungsvorrichtung jeweils in Abhängigkeit eines vom bestimmten Ablaufblock umfassten vorbestimmten Verlaufs. Dabei kann der Verlauf eine Drehzahl der Bearbeitungsvorrichtung oder ein Drehmoment der Bearbeitungsvorrichtung umfassen.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Erfindung wird nun unter Bezug auf die beiliegenden Figuren genauer beschrieben, in denen:
- Figur 1: einen Kochprozessor;
- Figur 2: ein Ablaufdiagramm eines Verfahrens; und
- Figur 3: beispielhafte Verläufe eines Ablaufblocks für einen Kochprozessor darstellt.

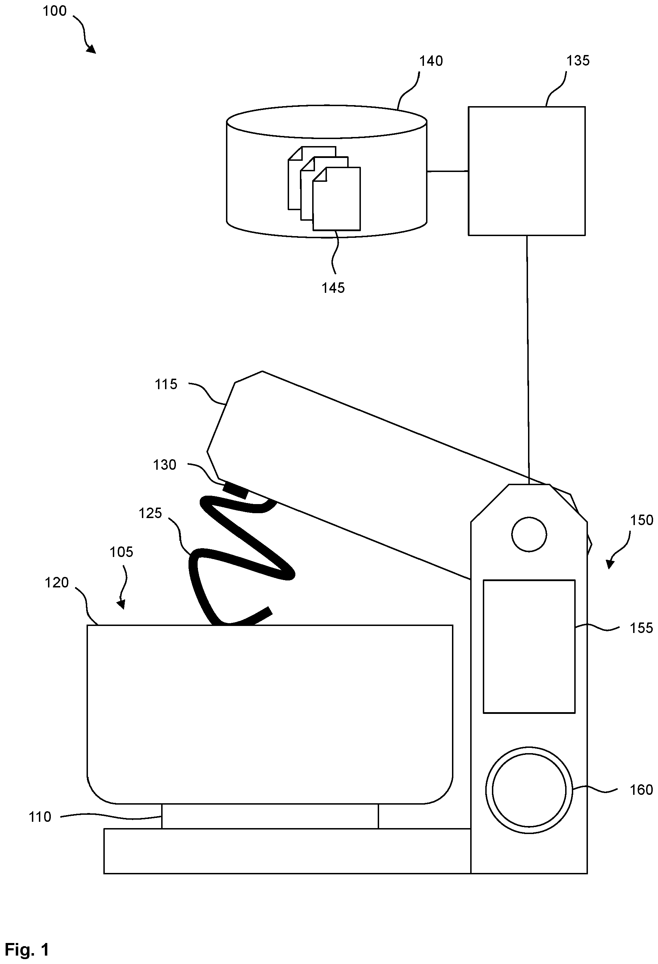

Figur 1 zeigt einen Kochprozessor 100, der zur Behandlung von Lebensmitteln 105 eingerichtet ist. Die Lebensmittel 105 können insbesondere Zutaten für eine Speise sein, wobei die Zutaten im Rahmen eines Verarbeitungsschritts miteinander verarbeitet werden können. Der Verarbeitungsschritt kann Teil eines Rezepts zur Zubereitung der Speise sein. Mehrere Verarbeitungsschritte können mittels des Kochprozessors 100 nacheinander ausgeführt werden, sodass ein Teilprodukt der Speise oder die gesamte Speise mittels des Kochprozessors 100 zubereitet werden kann.

Der Kochprozessor 100 umfasst eine Heizeinrichtung 110 und eine Bearbeitungsvorrichtung 115. Die Heizeinrichtung 110 ist bevorzugt zum Erwärmen eines Gefäßes 120 eingerichtet, in dem sich ein Lebensmittel 105 befindet. Dabei kann die Heizeinrichtung 110 in Bodennähe des Gefäßes 120 angeordnet sein und beispielsweise eine elektrische Widerstandsheizung oder eine induktive Heizung für das Gefäß 120 umfassen. Die Heizeinrichtung 110 kann dazu angesteuert werden, eine vorbestimmte Wärmeleistung an das Gefäß 120 abzugeben, oder eine vorbestimmte Temperatur am oder im Gefäß 120 einzustellen. Zur Steuerung kann ein entsprechender Temperatursensor vorgesehen sein.

Die Bearbeitungseinrichtung 115 umfasst üblicherweise einen Antriebsmotor, der mit verschiedenen Werkzeugen 125 verbunden werden kann. Die Bearbeitungseinrichtung 115 kann in unterschiedliche Stellungen verbracht werden, und ein bestimmtes Werkzeug 125 kann eine vorbestimmte Stellung erfordern. Beispielhafte Werkzeuge 125 umfassen ein Reibwerk, in das verschiedene Reib-, Schneid- oder Schnitzelscheiben eingelegt werden können, einen Fleischwolf, einen Knethaken, einen Schneebesen, einen Mixer, eine Mühle, eine Eismaschine, eine Pastamaschine oder eine Zitruspresse. Üblicherweise erfolgt die Bearbeitung des Lebensmittels 105 entweder in dem Gefäß 120 oder ein Produkt kann durch das Gefäß 120 aufgenommen werden. Verschiedene Gefäße 120 können vorgesehen sein, von denen bevorzugt wenigstens eines durch die Heizeinrichtung 110 beheizbar ist.

Zur Erfassung eines Werkzeugs 125 kann eine Abtasteinrichtung 130 vorgesehen sein. Die Abtasteinrichtung 130 ist in der dargestellten Variante am Kochprozessor 100, insbesondere an der Bearbeitungseinrichtung 115 angebracht, um das Werkzeug 125 zu erfassen, wenn es mit der Bearbeitungseinrichtung 115 verbunden ist. In anderen Ausführungsformen kann das Werkzeug 125 auch abgetastet werden, wenn es nicht mit der Bearbeitungseinrichtung 115 verbunden ist. Die Abtastung erfolgt bevorzugt berührungslos, beispielsweise optisch oder mittels elektromagnetischer Wellen.

Der Kochprozessor 100 kann mittels einer Verarbeitungseinrichtung 135 gesteuert werden, die in Figur 1 lediglich zur leichteren Erläuterung außerhalb des Kochprozessors 100 dargestellt ist. Die Verarbeitungseinrichtung 135 ist bevorzugt mit einer Speichervorrichtung 140 verbunden, in der bevorzugt mehrere Ablaufblöcke 145 abgelegt sind. Dabei umfasst ein Ablaufblock 145 bevorzugt einen ersten Verlauf, anhand dessen die Heizeinrichtung 110 gesteuert werden kann, und einen zweiten Verlauf, anhand dessen die Bearbeitungsvorrichtung 115 gesteuert werden kann. In einer Ausführungsform ist einem Ablaufblock 145 eine Behandlungszeit zugeordnet, also eine Dauer der Erwärmung des Gefäßes 120 und/oder eine Dauer einer Bearbeitung mittels der Bearbeitungseinrichtung 115. In einer anderen Ausführungsform kann die Dauer gewählt werden, optional innerhalb vorbestimmter Grenzen. Einem Ablaufblock 145 können eines oder mehrere Werkzeuge 125 zugeordnet sein, die für die Bearbeitung mittels der Bearbeitungsvorrichtung 115 verwendet werden können.

Außerdem umfasst der Kochprozessor 100 bevorzugt eine Interaktionseinrichtung 150, die eine Ausgabeeinrichtung 155 zur insbesondere optischen Ausgabe und/oder eine Eingabeeinrichtung 160 zur insbesondere haptischen Eingabe umfassen kann. Mittels der Interaktionseinrichtung 150 kann ein Benutzer die Heizeinrichtung 110 oder die Bearbeitungseinrichtung 115 direkt steuern oder eine Steuerung auf der Basis eines Ablaufblocks 145 veranlassen. Dazu kann er einen der Ablaufblöcke 145 auswählen und die Behandlung starten. Die Auswahl des Ablaufblocks 145 kann durch einen Hinweis, eine Einschränkung oder eine Vorgabe erleichtert sein. Der Ablaufblock 145 kann anhand eines durchzuführenden Verarbeitungsschritts ausgewählt werden, beispielsweise Rühren, Schlagen, Schnitzeln, Schneiden, Mixen etc. Der Ablaufblock 145 kann auch in Abhängigkeit eines zu verwendenden Werkzeugs 125, eines zu bearbeitenden Lebensmittels 105 und/oder eines Parameters für das Erwärmen mittels der Heizeinrichtung 110 oder des Bearbeitens mittels der Bearbeitungseinrichtung 115 ausgewählt werden. In allen Varianten kann ein Hinweis auf einen wählbaren Ablaufblock 145 in Abhängigkeit einer bereits erfolgten Vorgabe mittels der Interaktionseinrichtung 155 bereitgestellt werden.

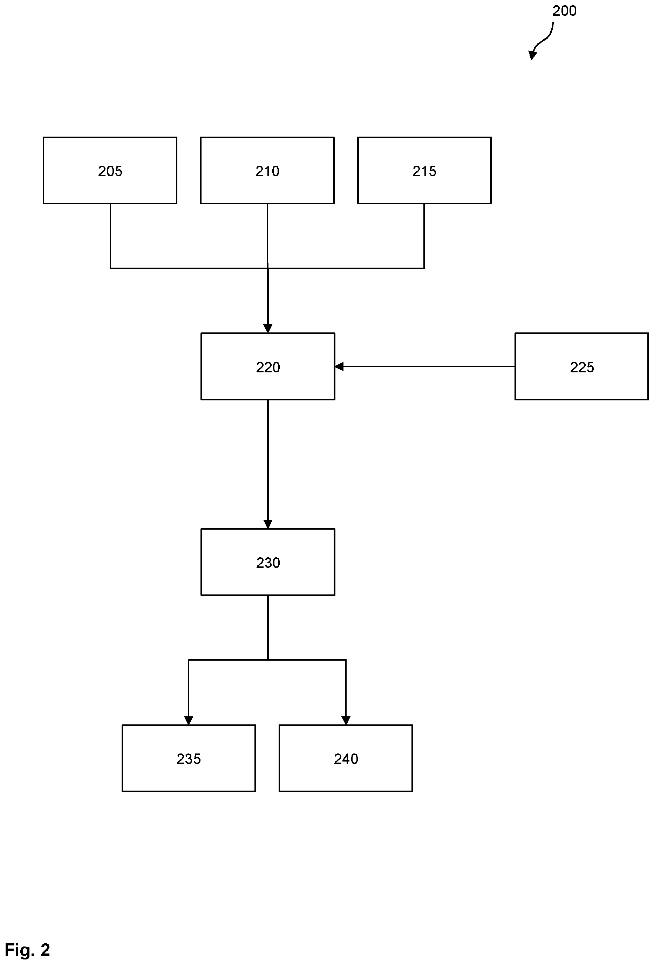

Figur 2 zeigt ein Ablaufdiagramm eines Verfahrens 200 zum Steuern eines Kochprozessors 100. Das Verfahren 200 kann insbesondere mittels des Kochprozessors 100 von Figur 1 durchgeführt werden.

In einem Schritt 205 kann eine benutzergesteuerte Eingabe einer gewünschten Erwärmung oder Temperatur erfasst werden. In einem Schritt 210 kann eine benutzergesteuerte Eingabe einer gewünschten Bearbeitungsstärke erfasst werden. Die Bearbeitungsstärke kann beispielsweise als Drehzahl oder Drehmoment ausgedrückt sein. In einem Schritt 215 kann eine Eingabe einer gewünschten Behandlungsdauer erfasst werden.

Auf der Basis der erfassten Eingaben kann in einem Schritt 220 einer von mehreren vorbestimmten Ablaufblöcken 145 ausgewählt werden. Die Auswahl kann zusätzlich auf der Basis eines gewünschten Verarbeitungsschritts erfolgen. Außerdem kann in einem Schritt 225 ein für die Bearbeitung zu verwendendes Werkzeug 125 bestimmt werden, wobei die Bestimmung das Erfassen einer benutzergesteuerten Eingabe oder das Abtasten eines Werkzeugs 125 umfassen kann.

Die Auswahl des Ablaufblocks 125 kann sukzessive erfolgen, indem zu einer benutzergesteuerten Vorgabe auf wählbare Ablaufblöcke 125 hingewiesen wird. Dabei können hingewiesene Ablaufblöcke 125 beispielsweise in der Reihenfolge der Wahrscheinlichkeit oder Häufigkeit ihrer Verwendung sortiert sein. Eine erste Eingabe eines Benutzers könnte beispielsweise ein zu verwendendes Werkzeug 125, eine zweite eine gewünschte Bearbeitungsstärke und eine dritte eine zu verwendende Temperatur umfassen. Dazu können nur noch diejenigen Ablaufblöcke 145 zur Auswahl angeboten werden, die diese Parameter umfassen. Sollte nur ein Ablaufblock 145 gefunden werden, so kann dieser direkt übernommen werden. Sollte kein Ablaufblock 145 gefunden werden können, der eine Kombination zuvor eingegebener Vorgaben unterstützt, so kann eine entsprechende Meldung ausgegeben werden. Optional wird auf einen Ablaufblock 145 hingewiesen, der die Kombination unterstützt, aber eine Änderung einer gegebenen Vorgabe erfordert. Ein Vorschlag für die Änderung kann von einem Benutzer übernommen werden.

In einem Schritt 230 kann eine Anpassung des gewählten Ablaufblocks 145 durch den Benutzer erfasst werden. Dabei kann die Anpassung eines oder mehrerer Parameter erlaubt werden, und die Anpassung kann nur innerhalb vorbestimmter Grenzen erlaubt werden. Beispielsweise kann eine dem Ablaufblock 145 zugeordnete Temperatur um nicht mehr als ±20 °C veränderbar sein.

In einer Ausführungsform kann die Dauer einer Behandlung kein Charakteristikum eines Ablaufblocks 145 sein, sondern insbesondere in diesem Schritt angegeben werden. Dazu kann erfindungsgemäss ein vorbestimmter Abschnitt eines vorbestimmten Verlaufs für die Erwärmung und/oder die Bearbeitung des Lebensmittels auf der Basis einer entsprechenden benutzergesteuerten Eingabe verändert werden, während ein anderer Abschnitt unverändert bleiben kann. Beispielsweise kann eine Beschleunigung des Antriebsmotors der Behandlungseinrichtung 115 gleich bleiben, während eine sich daran anschließende Behandlungsdauer variabel sein kann.

In einem Schritt 235 kann ein Verlauf der Temperatur oder Erwärmung des Gefäßes 120 auf der Basis des bestimmten Ablaufblocks 145 gesteuert werden. Parallel dazu kann in einem Schritt 240 ein Verlauf der Bearbeitung des Lebensmittels 105 mittels der Verarbeitungseinrichtung 115 gesteuert werden. Beide Verläufe können in Abhängigkeit einer vorbestimmten oder einer benutzergesteuerten Zeit gesteuert und insbesondere beendet werden. Nach dem Abschließen der Steuerung in den Schritten 235, 240 kann ein Hinweis an den Benutzer ergehen, etwa in Form eines akustischen Signals.

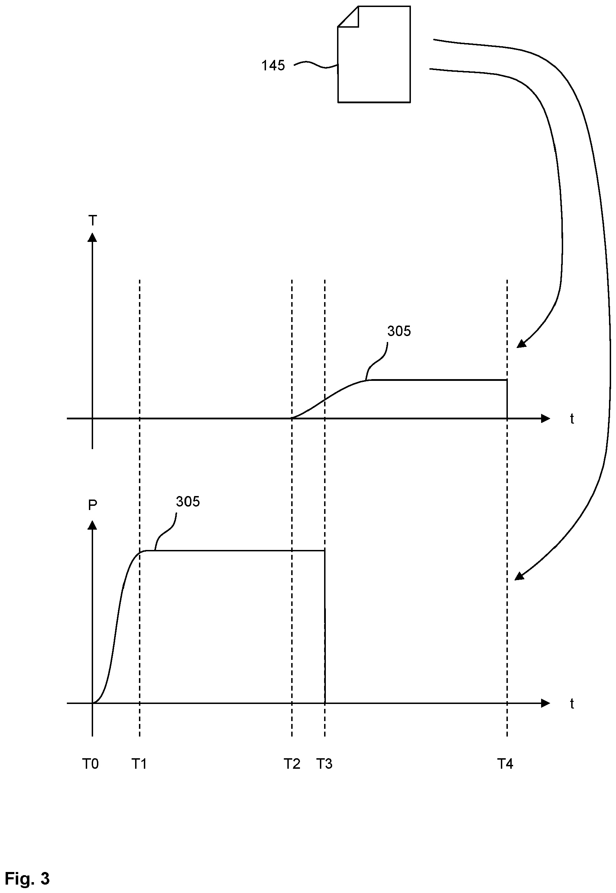

Figur 3 zeigt beispielhafte Verläufe eines Ablaufblocks für einen Kochprozessor. Ein erster Verlauf 305 betrifft eine Erwärmung eines Lebensmittels 105 im Gefäß 120, ein zweiter Verlauf 310 eine gleichzeitige Bearbeitung des Lebensmittels 105. In einer horizontalen Richtung ist eine Zeit angetragen. Für den ersten Verlauf 305 ist in vertikaler Richtung eine Erwärmung angetragen, hier als Temperatur. Für den zweiten Verlauf 310 ist in vertikaler Richtung eine Bearbeitungsstärke angegeben, hier als mechanische Leistung.

Die Verläufe 305, 310 sind einem vorbestimmten Ablaufblock 145 zugeordnet, der in Abhängigkeit einer gewünschten Erwärmung, einer gewünschten Bearbeitung, eines gewünschten Werkzeugs 125, einer gewünschten Behandlungsdauer und/oder eines gewünschten Verarbeitungsschritts ausgewählt werden kann. Einer der Verläufe 305, 310 des gewählten Ablaufblocks 145 kann durch einen Benutzer angepasst werden.

Im vorliegenden Beispiel betrifft ein durchgeführter Verarbeitungsschritt das Ansetzen eines Hefeteigs. Nachdem alle erforderlichen Zutaten 105 in das Gefäß 120 verbracht wurden, können sie, beginnend zu einem Zeitpunkt T0, miteinander vermengt und durchgeknetet werden. Dabei steigt eine durch den Antriebsmotor der Bearbeitungseinrichtung 115 bereitgestellte mechanische Leistung zunächst nach einer vorbestimmten Kurve an, um die Mechanik des Kochprozessors 100 und/oder die Zutaten 105 zu schonen. Anschließend können ab einem Zeitpunkt T1 die Zutaten 105 mit gleichbleibender Stärke weiter bearbeitet werden. Im Vergleich mit anderen Behandlungen kann die Stärke der Bearbeitung relativ groß sein, wobei der Antriebsmotor ein relativ hohes Drehmoment abgibt, bevorzugt ohne dabei eine hohe Drehzahl zu erreichen.

Zu einem Zeitpunkt T2 kann die Heizeinrichtung 110 aktiviert werden. Dabei kann die Stärke einer Erwärmung des Gefäßes 120 nach einer vorbestimmten Kurve gesteuert werden. Ist eine vorbestimmte Temperatur erreicht, so kann diese gehalten werden. Die gewählte Temperatur ist bevorzugt moderat, um ein Gehen der Hefe zu fördern, und kann im vorliegenden Beispiel bei ca. 32 °C liegen. Für eine vorbestimmte Zeit nach dem Zeitpunkt T2 kann die Bearbeitung fortgeführt werden.

Zu einem Zeitpunkt T3 kann die Bearbeitungseinrichtung 115 abgeschaltet werden. Vorliegend wird dabei keinem besonderen Verlauf gefolgt, die Abschaltung kann unmittelbar erfolgen. Nach einer vorbestimmten Zeit kann zu einem Zeitpunkt T4 die Heizeinrichtung 110 abgeschaltet werden. Damit können die dem gewählten Ablaufblock 145 zugeordneten Verläufe 305, 310 beendet sein.

In einer Ausführungsform ist wenigstens einer der Zeitpunkte T0 bis T4 durch die Erfüllung einer Bedingung bestimmt, beispielsweise das Erreichen einer vorbestimmten Temperatur oder den Ablauf einer vorbestimmten Dauer. Der Ablaufblock 145 kann die Aktivierung der Heizeinrichtung 110 und/oder der Bearbeitungseinrichtung 115 programmatisch steuern.

Soll eine Dauer der mit dem Ablaufblock 145 verbundenen Behandlungen verändert werden, so können die Verläufe 305, 310 entsprechend zeitlich skaliert werden. Erfindungsgemäss werden aber nur vorbestimmte Abschnitte der Verläufe 305, 310 verändert, während andere konstant bleiben können. Vorliegend kann etwa der Abschnitt zwischen T0 und T1 konstant gelassen werden, und der sich daran anschließende Abschnitt bis zum Zeitpunkt T2 oder T3 kann variiert werden. Ebenso kann beispielsweise die Dauer des Abschnitts zwischen den Zeitpunkten T3 und T4 variiert werden.

### Bezugszeichen

- 100: Kochprozessor
- 105: Lebensmittel, Zutat
- 110: Heizeinrichtung
- 115: Bearbeitungseinrichtung
- 120: Gefäß, Rührschüssel
- 125: Werkzeug
- 130: Abtasteinrichtung
- 135: Verarbeitungseinrichtung
- 140: Speichervorrichtung
- 145: Ablaufblock
- 150: Interaktionseinrichtung
- 155: Ausgabeeinrichtung
- 160: Eingabeeinrichtung

- 200: Verfahren
- 205: Eingabe Temperatur
- 210: Eingabe Bearbeitung
- 215: Eingabe Dauer
- 220: Ablaufblock auswählen
- 225: Bestimmen Werkzeug
- 230: Anpassung zulassen
- 235: Steuern Temperaturverlauf
- 240: Steuern Bearbeitungsverlauf

## Patentansprüche

1. Kochprozessor (100) zur Behandlung von Lebensmitteln (105), wobei der Kochprozessor (100) folgendes umfasst:
- eine Heizeinrichtung (110);
- eine mechanische Bearbeitungsvorrichtung (115);
- eine Speichervorrichtung (140) zur Aufnahme von vorbestimmten Ablaufblöcken (145); und
- eine Verarbeitungseinrichtung (135), die dazu eingerichtet ist:
∘ einen der Ablaufblöcke (145) zu bestimmen, und
∘ die Heizeinrichtung (110) und/oder die Bearbeitungsvorrichtung (115) jeweils in Abhängigkeit eines vom bestimmten Ablaufblock (145) umfassten vorbestimmten Verlaufs (305, 310) zu aktivieren, wobei ein vorbestimmter Abschnitt eines vorbestimmten Verlaufs (305, 310) für die Erwärmung und/oder die Bearbeitung des Lebensmittels (105) auf der Basis einer entsprechenden benutzergesteuerten Eingabe verändert werden kann, während ein anderer Abschnitt unverändert bleiben kann.

2. Kochprozessor (100) nach Anspruch 1, wobei die Verarbeitungseinrichtung (135) dazu eingerichtet ist, den Ablaufblock (145) in Abhängigkeit von benutzergesteuerten Eingaben für eine Erwärmungsintensität, eine Bearbeitungsintensität und eine Behandlungszeit zu bestimmen.

3. Kochprozessor (100) nach Anspruch 1 oder 2, wobei die Verarbeitungseinrichtung (135) dazu eingerichtet ist, den Ablaufblock (145) in Abhängigkeit eines mit der Bearbeitungsvorrichtung (115) verbundenen Werkzeugs (125) zu bestimmen.

4. Kochprozessor (100) nach Anspruch 3, wobei das Werkzeug (125) auf der Basis einer benutzergesteuerten Eingabe bestimmt wird.

5. Kochprozessor (100) nach Anspruch 3 oder 4, ferner umfassend eine Abtasteinrichtung zur Bestimmung eines mit der Bearbeitungsvorrichtung (115) verbundenen Werkzeugs (125).

6. Kochprozessor (100) nach einem der vorangehenden Ansprüche, ferner umfassend eine Interaktionseinrichtung (150) zur Bereitstellung eines Parameters für eine Aktivierung der Bearbeitungsvorrichtung (115) oder der Heizeinrichtung (110) in Abhängigkeit des Ablaufblocks (145), sowie zur Abtastung einer benutzergesteuerten Änderung des Parameters.

7. Kochprozessor (100) nach Anspruch 6, wobei die Änderung nur innerhalb eines vorbestimmten Bereichs zugelassen wird.

8. Verfahren (200) zum Steuern eines Kochprozessors (100) zur Behandlung von Lebensmitteln, wobei der Kochprozessor (100) eine Heizeinrichtung (110) und eine mechanische Bearbeitungsvorrichtung (115) umfasst; wobei das Verfahren (200) folgende Schritte umfasst:
- Bestimmen (220) eines von mehreren vorbestimmten Ablaufblöcken (145); und
- Aktivieren (235, 240) der Heizeinrichtung (110) und/ oder der Bearbeitungsvorrichtung (115) jeweils in Abhängigkeit eines vom bestimmten Ablaufblock (145) umfassten vorbestimmten Verlaufs (305, 310), wobei ein vorbestimmter Abschnitt eines vorbestimmten Verlaufs (305, 310) für die Erwärmung und/oder die Bearbeitung des Lebensmittels (105) auf der Basis einer entsprechenden benutzergesteuerten Eingabe verändert werden kann, während ein anderer Abschnitt unverändert bleiben kann

9. Kochprozessor (100) nach einem der vorangehenden Ansprüche 1 bis 7, wobei der Verlauf (310) eine Drehzahl der Bearbeitungsvorrichtung (115) umfasst.

10. Kochprozessor (100) nach einem der vorangehenden Ansprüche 1 bis 7, 9, wobei der Verlauf (310) ein Drehmoment der Bearbeitungsvorrichtung (115) umfasst.

## Claims

1. Cooking processor (100) for handling of foodstuffs (105), wherein the cooking processor (100) comprises the following:
- a heating facility (110);
- a mechanical food processing facility (115);
- a memory facility (140) for accommodating predetermined process blocks (145); and
- a processor facility (135), which is configured:
∘ to determine one of the process blocks (145), and
∘ to activate the heating facility (110) and/or the food processing facility (115) as a function in each case of a predetermined process sequence (305, 310) comprised by a specific process block (145), wherein a predetermined section of a predetermined process sequence (305, 310) for the heating and/or the processing of the foodstuff (105) can be changed on the basis of a corresponding user-controlled input, while another section can remain unchanged.

2. Cooking processor (100) according to claim 1, wherein the processor facility (135) is configured to determine the process block (145) as a function of user-controlled inputs for a heating intensity, a food processing intensity and a handling time.

3. Cooking processor (100) according to claim 1 or 2, wherein the processor facility (135) is configured to determine the process block (145) as a function of a tool (125) connected to the food processing facility (115).

4. Cooking processor (100) according to claim 3, wherein the tool (125) is determined on the basis of a user-controlled input.

5. Cooking processor (100) according to claim 3 or 4, further comprising a scanning facility for determination of a tool (125) connected to the food processing facility (115).

6. Cooking processor (100) according to one of the preceding claims, further comprising an interaction facility (150) for provision of a parameter for an activation of the food processing facility (115) or of the heating facility (110) as a function of the process block (145), and also for scanning for a user-controlled change to the parameter.

7. Cooking processor (100) according to claim 6, wherein the change is only permitted within a predetermined range.

8. Method (200) for control of a cooking processor (100) for handling of foodstuffs,
wherein the cooking processor (100) comprises a heating facility (110) and a mechanical food processing facility (115); wherein the method (200) comprises the following steps:
- determining (220) one of a number of predetermined process blocks (145); and
- activating (235, 240) the heating facility (110) and/or the food processing facility (115) as a function in each case of the predetermined process sequence (305, 310) comprised by the process block (145) determined, wherein a predetermined section of a predetermined process sequence (305, 310) for the heating and/or the processing of the foodstuff (105) can be changed on the basis of a corresponding user-controlled input, while another section can remain unchanged.

9. Cooking processor (100) according to one of the preceding claims 1 to 7, wherein the execution sequence (310) comprises a rotational speed of the food processing facility (115).

10. Cooking processor (100) according to one of the preceding claims 1 to 7, 9, wherein the execution sequence (310) comprises a torque of the food processing facility (115).

## Revendications

1. Robot cuiseur (100) pour le traitement d'aliments (105), dans lequel le robot cuiseur (100) comprend les éléments suivants :
- un dispositif de chauffe (110) ;
- un appareil de traitement mécanique (115) ;
- un dispositif de mémoire (140) pour la réception de blocs de déroulement prédéterminés (145) ; et
- un dispositif de traitement (135) configuré pour :
∘ déterminer un des blocs de déroulement (145), et
∘ activer le dispositif de chauffe (110) et/ou l'appareil de traitement (115) à chaque fois en fonction d'un déroulement (305, 310) prédéterminé prévu par le bloc de déroulement (145) déterminé, une section prédéterminée d'un déroulement prédéterminé (305, 310) pouvant être modifiée pour le réchauffage et/ou le traitement de l'aliment (105), sur base d'une entrée à cet effet commandée par l'utilisateur tandis qu'une autre section reste inchangée.

2. Robot cuiseur (100) selon la revendication 1, dans lequel le dispositif de traitement (135) est configuré pour déterminer le bloc de déroulement (145) en fonction des entrées commandées par l'utilisateur relatives à une intensité de réchauffage, à une intensité de traitement et à une durée de traitement.

3. Robot cuiseur (100) selon la revendication 1 ou 2, dans lequel le dispositif de traitement (135) est configuré pour déterminer le bloc de déroulement (145) en fonction d'un ustensile (125) raccordé à l'appareil de traitement (115).

4. Robot cuiseur (100) selon la revendication 3, dans lequel l'ustensile (125) est déterminé sur base d'une entrée commandée par l'utilisateur.

5. Robot cuiseur (100) selon la revendication 3 ou 4, comprenant en outre un dispositif tactile pour la détermination d'un ustensile (125) raccordé à l'appareil de traitement (115).

6. Robot cuiseur (100) selon l'une des revendications précédentes, comprenant en outre
un dispositif interactif (150) pour la fourniture d'un paramètre d'activation de l'appareil de traitement (115) ou du dispositif de chauffe (110) en fonction du bloc de déroulement (145), ainsi que pour la modification commandée par l'utilisateur du paramètre par palpation.

7. Robot cuiseur (100) selon la revendication 6, dans lequel la modification n'est admise que dans des limites prédéterminées.

8. Procédé (200) de commande d'un robot cuiseur (100) pour le traitement d'aliments, dans lequel le robot cuiseur (100) comprend un dispositif de chauffe (110) et un appareil de traitement mécanique (115), le procédé (200) comprenant les étapes suivantes :
- détermination (220) d'un parmi plusieurs blocs de déroulement (145) prédéterminés ; et
- activation (235, 240) du dispositif de chauffe (110) et/ou de l'appareil de traitement (115) à chaque fois en fonction d'un déroulement (145) prédéterminé prévu par le bloc de déroulement (145) déterminé, une section prédéterminée d'un déroulement prédéterminé (305, 310) pouvant être modifiée pour le réchauffage et/ou le traitement de l'aliment (105), sur base d'une entrée à cet effet commandée par l'utilisateur tandis qu'une autre section reste inchangée.

9. Robot cuiseur (100) selon l'une des revendications précédentes 1 à 7, dans lequel le déroulement (310) comprend un régime pour l'appareil de traitement (115).

10. Robot cuiseur (100) selon l'une des revendications précédentes 1 à 7, 9, dans lequel le déroulement (310) comprend un couple de l'appareil de traitement (115).
